# EUROPEAN PATENT APPLICATION

(11) **EP 4 541 543 A1**
(43) Date of publication of application: **23.04.2025**
(21) Application number: 24206764.3
(22) Date of filing: 15.10.2024
(51) Int. Cl.: B29B 11/16, B29C 33/30

(54) **PROCESS FOR ATTAINING A SEMIFINISHED PRODUCT MADE OF COMPOSITE MATERIAL**

(30) Priority: 18.10.2023 IT 202300021699
(71) Applicant: Acus S.r.l., 35018 San Martino di Lupari (PD) (IT)
(72) Inventor: Picco, Sebastiano, 36056 Tezze sul Brenta (VI) (IT); Bergamin, Riccardo, 35018 San Martino di Lupari (PD) (IT); Medeossi, Fabrizio, 33100 Udine (UD) (IT)
(74) Representative: Gallo, Luca

(57) **Abstract**

Manufacture of a semifinished product made of composite material comprising a step of arranging an adaptive mold (1) provided with a main support structure (2), a plurality of support rods (3) slidably mounted on the main support structure (2), and blocking means arranged for blocking in position the support rods (3). A first step of adjusting the support rods (3) in order to bring them into corresponding operating positions, a first step of spreading a first composite material on the free end portions (31) of the support rods (3), and a first step of hardening the first material in order to form a base layer (101) are provided. A second step of spreading a second at least partially polymeric material on the base layer (101), and a second step of hardening the second material in order to form an upper layer (102) integral with the base layer (101) are also provided.

## Description

### Field of application

The present invention regards a process for attaining a semifinished product made of composite material, according to the preamble of the main independent claim.

The present process is inserted in the industrial field of processing composite materials for attaining semifinished products, in particular for attaining prototype molds for forming composite materials.

The present process is therefore inserted in the industrial field of production of semifinished products and finished manufactured products made of composite material, in particular in the production of molds, also large size, for attaining prototypes that are also made of composite material, mainly for the automobile industry.

### State of the art

Known in the field of processing composite materials are various processes for manufacturing semifinished products, in particular prototype molds for subsequently making pieces made of composite material, such as for example parts of automobile bodies.

More in detail, such molds are generally obtained by initially making a model of the piece to be produced, i.e. of the prototype or of the finished manufactured product. Such model can be attained by means of milling a block of material (e.g. wood or a light polymer), by means of 3D printing, or more rarely by means of manual modeling. Subsequently, a composite material is deposited on the surface of such model that is then allowed to harden.

Generally, the composite material used is a "pre-preg", i.e. it comprises a reinforcement fabric, made of carbon or glass fiber, pre-impregnated with polymeric resin, which once hardened constitutes the matrix thereof.

In addition, following the spreading, the hardening of the material is executed in autoclaves.

Alternatively, the spreading can be executed by means of the infusion technique (also known as Vacuum Infusion Process - VIP), which provides for placing the reinforcement fabric on the model, within a sack connected hydraulically to a vacuum pump. In addition, the spreading provides for drawing the vacuum within the sack and injecting the resin at its interior, from the side opposite the vacuum pumps. In this manner, the suction of the vacuum pump creates reduced pressure that pushes the catalyzed resin to traverse and impregnate all the fabric layers.

After the hardening, the molds thus attained are detached from the model, sometimes involving the necessary demolition of the latter, and the models can be used as base for producing the final piece.

Such process for manufacturing semifinished products, in particular molds, made of composite material have proven in practice that they do not lack drawbacks.

A first drawback lies in the fact that the construction of a model of the final piece to be produced, in particular if large size, requires the disposable use of a great quantity of material.

Such aspect thus involves a use of resources that are substantially wasted, with a consequent increase of the production costs.

A further drawback lies in the fact that in such process, the same need to produce a model, in addition to increasing the costs, also increases the production times, due to the mechanical processing operations that must be executed on the blocks of material to be shaped. Such times are further extended if the latter operations are manually executed.

A further drawback lies in the fact that, actually in order to use less-costly materials for making the model, often such process does not allow using specific composite materials provided with thermosetting matrix that crosslinks at high temperatures in order to make the mold, since the model would not resist at such temperatures once placed in the autoclave.

Otherwise, when the use of a composite material is requested that must crosslink at high temperatures in the autoclave, the model must be constructed with more resistant materials, which are thus costly and sometime requiring more complex processing, increasing times and costs.

In order to at least partly resolve the abovementioned drawbacks of the prior art, processes are known in the field which use adaptive molds (or reconfigurable molds), described for example in the documents US 2008251975 and US 2015084237, in substitution of the initial models.

The adaptive molds are in particular provided with a main support structure on which a plurality of support rods are slidably mounted, which are vertically movable and susceptible of defining a desired three-dimensional form, corresponding to the form of the piece to be attained, with the set of their free end portions.

In addition, the adaptive molds are provided with blocking means, mounted on the main support structure and arranged for blocking the support rods in the desired positions, in a manner such that the three-dimensional form is stably maintained for the required time period.

In addition, several particular adaptive molds, described for example in the documents WO 2012065614 and WO 2017153319, are provided with an additional elastic support membrane, fixed to the free ends of the support rods, in a manner such to be shaped in accordance with the three-dimensional form and act as a support surface for the composite material.

Therefore, the process initially provides that the adaptive mold be modified, changing the height position of each support rod, in order to shape the elastic support membrane (or generally the form defined by the free ends of the rods) and obtain the shape of the model of the piece to be attained.

Subsequently, the mold production steps are equivalent to those indicated above. Then, on the elastic support membrane of the modified adaptive mold (or generally on the free ends of the rods), a composite material is deposited which is then allowed to hardened. Also in such case, a spreading by means of pre-preg or by means of infusion can be used.

The mold obtained after crosslinking of the matrix of the composite material is removed from the adaptive mold, which can subsequently be reconfigured in order to produce other molds, and is used for producing the finished piece or the prototype.

Also the above-described process for attaining semifinished products, i.e. molds, made of composite material has in practice shown that it does not lack drawbacks.

A first drawback of such process is that the presence of the elastic support membrane that interconnects the free end portions of the support rods in practice makes it impossible to configure the adaptive mold with vertical or very tilted sections, since this would involve the risk of breakage of the elastic support membrane itself. Therefore, such technology can be used only for making molds with simple curve forms.

A further drawback lies in the fact that even in this case, the elastic support membrane is not particularly resistant to temperature and therefore does not enable the use of composite materials that require crosslinking at high temperatures in autoclaves in order to attain the mold.

In addition, the movement of the entire adaptive mold into autoclaves is particularly complex due to its bulk and the mechanical parts that allow the configuration thereof even automatically.

A further drawback lies in the fact that, in the absence of the elastic membrane, it is possible to mold only pre-preg materials, or it is necessary to use infusion techniques that in any case employ elastic support layers (e.g. the aforesaid sacks in which the reinforcement fabric is placed, and then the vacuum is drawn). Such aspect reduces the versatility of the above-described molds.

A further drawback lies in the fact that in such process, a release agent must be necessarily used above the elastic support membrane, so as to allow the removal of the semifinished product.

Consequently, when the composite material is hardened, the semifinished product, i.e. the obtained mold made of composite material, tends to be detached substantially autonomously, and it must be removed from the adaptive mold. It is thus necessary to create further supports for subsequently using it, with a consequent increase of the times and costs for the production of the finished piece.

### Presentation of the invention

In this situation the problem underlying the present invention is therefore that of remedying the drawbacks manifested by the abovementioned solutions of known type, by providing a process for attaining a semifinished product made of composite material, which allows making complex semifinished products, also provided with substantially vertical walls or sharp corners.

A further object of the present invention is to provide a process which allows processing composite materials at high temperatures.

A further object of the present invention is to provide a process, which allows preventing the shaping of models of the piece to be manufactured, starting from blocks of full material.

A further object of the present invention is to provide a process which allows lowering the production times.

A further object of the present invention is to provide a process which has high repeatability over time.

A further object of the present invention is to provide a process which is simple, versatile and inexpensive to actuate.

### Brief description of the drawings

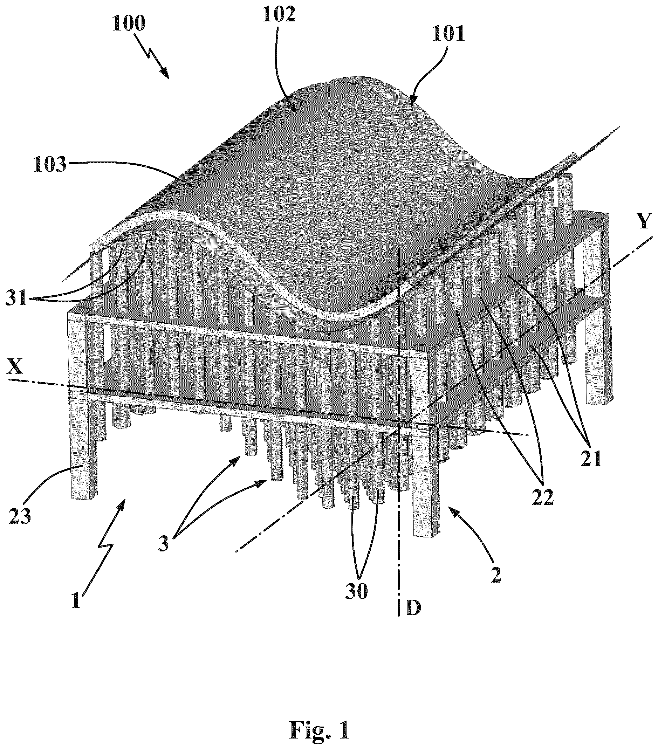

The technical characteristic of the present invention, according to the aforesaid objects, can be seen in the contents of the below-reported claims and the advantages thereof will be more evident in the following detailed description, made with reference to the enclosed figures, which represent a merely exemplifying and non-limiting embodiment of the invention, in which figure 1 shows a perspective view of an adaptive mold used in the process, object of the invention in accordance with a preferred embodiment thereof, on which a semifinished product is placed that is provided with a base layer and an upper layer.

### Detailed description of several preferred embodiments

With reference to the enclosed drawings, reference number 1 overall indicates an adaptive mold used in the process for attaining a semifinished product made of composite material in accordance with the present invention.

The process according to the invention is advantageously intended to be employed for making a semifinished product made of composite material, which can be for example a prototype mold usable in the forming of prototypes, such as for example parts of automobile bodies.

The process according to the invention then provides for a step of arranging uno adaptive mold 1, which is provided with a main support structure 2 and a plurality of support rods 3, which are slidably mounted on the main support structure 2.

More in detail, the support structure 2 comprises at least one perforated support plate 21, on which a plurality of through holes 22 is attained. Advantageously, the support plate 21 is planar and preferably placed horizontally.

In addition, the support plate 21 is preferably quadrangular. Of course, without departing from the protective scope of the invention, the support plate 21 can be made of any other shape.

Advantageously, hereinbelow, the expressions "horizontal/horizontally" and "vertical/vertically" will be intended as referred to the ground where the adaptive mold 1 is susceptible of being placed in abutment.

Advantageously, the through holes 22 are placed aligned on the support plate 21 along at least one first main direction X, and preferably also along a second main direction Y. Advantageously, the second main direction Y is tilted, preferably orthogonal, with respect to the first main direction X, i.e. the through holes 22 are preferably attained such to substantially form a grid on the support plate 21.

In accordance with the preferred embodiment illustrated in figure 1, the support structure 2 comprises at least two superimposed support plates 21, i.e. in particular one placed below and one above, and parallel. In addition, such support plates 21 advantageously have corresponding through holes 22 that are vertically aligned. In particular, such support plates 21 are equivalent to each other.

Advantageously, the perforated plate 21 (or perforated plates 21) is preferably supported by support columns 23 intended to abut against the ground.

Advantageously, each support rod 3 is slidably inserted, preferably to size, within a corresponding through hole 22 of the support plate 21. In the case of two (or more) support plates 3, as in figure 1, each support rod 3 is placed passing through the through holes 22 aligned with both the support plates 3.

In accordance with the invention, each support rod 3 of the plurality of support rods 3 is movable along a corresponding adjustment direction D and is provided with a free end portion 31.

More in detail, the adjustment direction D is vertical, preferably orthogonal to the first and to the second main direction X, Y. In addition, the adjustment directions D of the support rods 3 are preferably parallel to each other.

Advantageously, in addition, the support rods 3 comprise an elongated sliding body 30, provided with the aforesaid free end portion 31.

In addition, the adaptive mold 1 comprises blocking means, mounted on the main support structure 2 and arranged for blocking in position the support rods 3.

For example, the blocking means (not illustrated in the enclosed figure) comprise a plurality of clamps, each placed at the respective support rod 3 and movable, in a per se known manner, between a release configuration, in which the sliding of the support rod 3 is allowed, and a blocking configuration, in which the sliding of the support rod 3 is prevented.

Of course, without departing from the protective scope of the invention, the blocking means can be attained differently from clamps and can be moved between the blocking and release configuration in a manual manner or at least partly, preferably completely, automated.

Advantageously, the blocking means are mounted on at least one support plate 21.

In the preferable case in which the adaptive mold 1 is automated, the latter also advantageously comprises movement means (not illustrated in the enclosed figure), intended to move the support rods 3 along the adjustment direction D, advantageously up to a desired operating position.

For example, in accordance with a first alternative, the movement means comprise a Cartesian manipulator, in particular of known type, for example extended parallel to the first main direction X and to the second main direction Y, preferably below the support plate 21, and a movable actuator mounted on the Cartesian manipulator. Advantageously, the movable actuator, which for example comprises a worm screw driven by a motor, is selectively associable with each support rod 3 in order to move it along the adjustment direction D. In this manner, with a single movable actuator it is possible to move, one after the other, all the support rods 3, allowing the reduction of the costs of the adaptive mold 1.

In addition, the movement means this attained are advantageously releasable from the support structure 2 in case of movement of the adaptive mold 1.

Of course, the movement means can be attained in any other known manner. For example, in accordance with a second alternative, the movement means comprise a plurality of fixed actuators, for example comprising hydraulic pistons, each associated with a corresponding support rod 3. Such fixed actuators can be directly mounted on the support structure 2. In this manner, such actuators can simultaneously move the support rods 3, diminishing the times for configuring the adaptive mold 1.

In accordance with a further third alternative, intermediate between the two above-described alternatives, the movement means comprise a plurality of guides placed parallel to the first or to the second main direction X, Y and a plurality of movable actuators, each mounted on a corresponding guide. In this manner, each movable actuator moves in succession the support rods 3 placed along a same line or row (depending on the main direction X, Y along which the corresponding guide is placed). In this manner, times and costs lie intermediate between the above-described alternatives.

Advantageously, the adaptive mold 1 also comprises a logic control unit, in data connection with the movement means and/or with the blocking means in order to command the actuation thereof, preferably in an automated manner.

Advantageously, the process comprises a step of defining a desired surface to be imparted to the semifinished product made of composite material. In particular, if the semifinished product is a prototype mold, the desired surface at least approximately corresponds to the surface of such mold. Alternatively, if the semifinished product is a model, a prototype or a piece to be manufactured, the desired surface at least approximately corresponds to the surface of such model, prototype or piece.

Such desired surface can advantageously comprise vertical sections, or corners or edges that are particularly sharp, or less than 120°, preferably less than 100°, still more preferably close to or less than 90°.

Advantageously, the definition step provides for importing and processing the desired surface in the logic control unit of the adaptive mold 1.

According to the invention, the process also comprises an adjustment step, in which at least one support rod 3 is moved along the corresponding adjustment direction D and blocked in a corresponding operating position by means of the blocking means.

Advantageously, with the support rods 3 in the corresponding operating positions, their free end portions 31 are positioned along the previously defined desired surface.

In the event in which the process is at least partly automated, in the adjustment step the logic control unit sends corresponding movement signals to the movement means in order to drive them to move the support rods 3 along the adjustment directions D and/or corresponding release signals to the blocking means in order to actuate them to release the support rods 3 so as to allow them to be free to slide and/or corresponding blocking signals to the blocking means in order to drive them to block the support rods 3 in the respective operating positions.

Of course, without departing from the protective scope of the invention, the adjustment step, like the entire process, can also be executed manually, by adjusting the height of each support rod 3 and blocking it in the operating position by suitably driving the blocking means.

According to the invention, the process also comprises a first spreading step, in which a first material, which is a composite material, is spread on the free end portions 31 of the support rods 3 of the adaptive mold 1.

Advantageously, in the first spreading step, the first material is placed so as to substantially form the desired surface and can advantageously comprise vertical sections, or corners or edges that are particularly sharp, or less than 120°, preferably less than 100°, still more preferably close to or less than 90°.

More in detail, the first material comprises a first polymer matrix, thermoplastic or thermosetting, and a first fibrous reinforcement.

Advantageously, the first polymer matrix of the first material is a thermosetting resin selected from among: epoxy, polyester, vinyl ester, and mixtures thereof.

Alternatively, the first polymer matrix of the first composite material is advantageously thermoplastic and comprises at least one from among: polypropylene (PP), polyamide (PA), polycarbonate (PC), polycaprolactone (PCL), polyether ether ketone (PEEK), polyphenylene sulfide (PPS), styrene-acrylonitrile (SAN), polyetherimide (PEI).

Advantageously, the first fibrous reinforcement comprises at least one from among: carbon fiber, gas fiber, aramid fibers, ceramic fibers, natural fibers, metallic fibers.

Preferably, the first fibrous reinforcement is a fabric. In this manner, the first material, even if not hardened, is susceptible of remaining in abutment against the free end portions 31 of the support rods 3 without falling into the interstices between them.

Advantageously, in the first spreading step, the first material is placed on the support rods 3 as pre-preg, i.e. as first fibrous reinforcement pre-impregnated with the polymer of the first polymer matrix.

In accordance with an embodiment variant, in the first spreading step the first fibrous reinforcement is previously placed on the free end portions 31 of the support rods 3 and subsequently the polymer of the first polymer matrix is distributed on such first fibrous reinforcement.

In accordance with a further embodiment variant, in particular if the first polymer matrix is thermoplastic, the first material is distributed by means of thermoforming, i.e. by means of spreading of a rigid layer of such first material and subsequent softening by means of heating. In this manner, the first material with first thermoplastic polymer matrix can be shaped in abutment against the free end portions 31 of the support rods 3.

Optionally, in the first spreading step, multiple first fibrous reinforcements are superimposed that are bound by the same first polymer matrix, so as to obtain a first stratified material.

Preferably, the first spreading step is executed manually. Of course, such first spreading step can also be executed in an automated manner by means of suitable machines or manipulators.

According to the invention, the process also provides for a first hardening step, in which the first material is allowed to at least partially harden in order to form a base layer 101. Preferably, the base layer 101 is continuous and interconnects the upper end portions 31 of the support rods 3.

Advantageously, with the term "hardening", it will be intended the increase of the rigidity of the first material, which if it comprises a thermoplastic polymer corresponds to the solidification following a decrease of the temperature, while if it comprises a thermosetting polymer it corresponds to the solidification following the crosslinking of the polymer itself.

Advantageously, the first hardening step is extended until the entire first material is hardened, in order to form a rigid base layer 101.

Of course, without departing from the protective scope of the present invention, the subsequent steps can be executed, even before the first material is completely hardened, as long as the latter be provided with sufficient structural solidity and can support subsequent layers.

In the event in which the first polymer matrix of the first material is thermosetting, for example if the composite material is a pre-preg, the first hardening step is advantageously executed in autoclaves, in particular at a suitable temperature depending on the crosslinking temperature of the first polymer matrix.

Otherwise, in the event in which the first polymer matrix of the first material is thermoplastic, the first hardening step is advantageously executed at ambient temperature, or at a controlled temperature lower than the softening temperature of the first polymer matrix.

According to the invention, the process also provides for a second spreading step, in which a second material, which is an at least partially polymeric material, is spread on the base layer 101.

Advantageously, the second material can be selected from among a large variety of completely polymeric or composite materials and the second spreading step can be executed by means of various known techniques.

Preferably, the second material is selected from among:
- an epoxy thermosetting paste;
- a thermosetting resin selected from among: epoxy, polyester, vinyl ester, polyurethane, and mixtures thereof;
- a composite material comprising a second polymer matrix, thermoplastic or thermosetting, and a second reinforcement; and
- combinations thereof.

Advantageously, in the event in which the second material is a thermosetting paste or a thermosetting resin, in the second spreading step it is distributed by means of: extrusion, spraying or manually.

In particular, the extrusion can be executed by means of a screw extruder, by means of a piston, by means of a compressed air apparatus, or by means of 3D printing.

Otherwise, in the event in which the second material is a composite material, in the second spreading step it is advantageously distributed by means of: manual spreading of second polymer matrix and second reinforcement, pre-preg spreading, vacuum infusion, resin transfer molding (RTM), automated tape laying (ATL), automated fiber placement (AFP) or automated patch positioning.

More in detail, the manual spreading of second polymer matrix and second reinforcement provides for previously placing the second reinforcement on the base layer 101 and subsequently distributing the polymer of the second polymer matrix on such second reinforcement.

In accordance with an above-described variant, the spreading of the second material as pre-preg provides for placing the second reinforcement pre-impregnated with the polymer of the second polymer matrix.

In accordance with a further above-described variant, the spreading by means of vacuum infusion provides for placing the second reinforcement on the base layer 101, within a sack hydraulically connected to a vacuum pump. In addition, the spreading provides for drawing the vacuum within the sack and injecting the polymer of the second polymer matrix at its interior. In this manner, the suction of the vacuum pump creates a reduced pressure that pushes the polymer of the second polymer matrix to traverse and impregnate the second reinforcement.

In accordance with a further above-described variant, the spreading by means of resin transfer molding (RTM) provides for placing the second reinforcement on the base layer 101, within a further mold and injecting, within such further mold, the polymer of the second polymer matrix under pressure. In this manner, the pressure pushes the polymer of the second polymer matrix to traverse and impregnate the second reinforcement.

In accordance with a further above-described variant, the spreading by means of automated tape laying (ATL) provides for depositing, in an automated manner, a continuous tape made of the second material, i.e. a tape comprising the second reinforcement impregnated with the polymer of the second polymer matrix.

In accordance with a further above-described variant, the spreading by means of automated fiber placement (AFP) provides for depositing, in an automated manner, the second reinforcement in the form of continuous fiber impregnated with the polymer of the second polymer matrix.

In accordance with a further above-described variant, the spreading by means of automated patch positioning provides for depositing, in an automated manner, pre-preg portions.

The variants briefly described above are advantageously of known type and will therefore not be discussed in detail hereinbelow.

Optionally, in the event in which the second material is a composite material, in the second spreading step multiple second reinforcements are superimposed, bound by the same second polymer matrix, so as to obtain a second stratified material.

Advantageously, the second reinforcement can be made of fibers or particles, since it is not required to be self-supporting during application.

According to the invention, the process also comprises a second hardening step, in which the second material is allowed to at least partially harden in order to form an upper layer 102 integral with the base layer 101.

Advantageously, the second hardening step is extended until the entire second material is hardened in order to form a rigid upper layer 102.

In the event in which the second material is at least partially a thermosetting polymer, for example if it is a composite material with thermosetting second polymer matrix, in particular a pre-preg, the second hardening step is advantageously executed in autoclaves, in particular at a suitable temperature depending on the crosslinking temperature of the second material.

Otherwise, in the event in which the second material is at least partially a thermoplastic polymer, for example if it is a composite material with thermoplastic second polymer matrix, the second hardening step is advantageously executed at ambient temperature, or at a controlled temperature lower than the softening temperature of the second material.

Of course, without departing from the protective scope of the invention, the process can comprise the spreading of further layers above the upper layer 102 or between the base layer 101 and the upper layer 102.

For example, so as to improve the adhesion between the upper layer 102 and the base layer 101, the process optionally provides for a gluing step, in which an adhesive component is distributed on the base layer.

In particular, the gluing step is executed between the first hardening step and the second spreading step.

In accordance with the process, object of the invention, at least the base layer 101 and the upper layer 102 form a semifinished product 100 made of composite material.

As indicated above, such semifinished product 100 can be used for example as prototype mold, as model, as prototype or as piece to be further processed in order to obtain a finished product. In particular, the process, object of the invention, is extremely advantageous for making prototype molds for composite materials, since it allows preventing the waste of large quantities of material and shortening the processing times. In the event in which such semifinished product is attained with thermoplastic materials, it can advantageously also be recycled and newly formed at the end of its use.

Advantageously, in order to improve the finish of the semifinished product 100, the process comprises a shaping step, subsequent to the second hardening step, in which at least one portion of the second material is removed from the surface of the upper layer 102 in order to obtain a shaped surface 103, preferably smoothed, on the upper layer 102.

In this manner, the shaped surface 103 can be used as a molding surface and it can be processed, also in a versatile manner, during the shaping step, acting not only on the surface finish, but also actually on the form and on the surface details of the surface of the semifinished product 100.

Otherwise, from that which occurs in the known processes described above, the molding surface is in fact in this case opposite the adaptive mold (or opposite the model), and being exposed and supported by the adaptive mold itself it can be processed as desired.

As will be described hereinbelow, in order to improve the stability of the semifinished product 100 in the shaping step, the latter can be fixed to the adaptive mold 1.

Advantageously, at least one said support rod 3 of the adaptive mold 1 comprises, at the corresponding free end portion 31 thereof, fixing means (not illustrated in the enclosed figure), arranged for fixing the semifinished product 100 made of composite material to the adaptive mold 1.

In accordance with the preferred embodiment of the invention, the support rods 3 comprise the elongated sliding body 30, provided with the free end portion 31, and the aforesaid fixing means, which comprise a fixing element mechanically associated with the free end portion 31.

In particular, the fixing element is at least one selected from among: a support base made of material equivalent to the first polymer matrix of the first material; an adhesive support base; a projecting body provided with an external thread; and a hollow body provided with an internal thread.

More in detail, a support base made of material equivalent to the first polymer matrix of the first material allows the adhesion of the first material to the support base itself. In accordance with such embodiment variant, the support base is advantageously "disposable", i.e. it remains fixed to the semifinished product 100 and, when the latter is removed from the adaptive mold 1, it is detached from the support rods 3.

In accordance with an above-described variant, also an adhesive support base allows the adhesion of the base layer 101 to the support base itself. In accordance with such embodiment variant, also in such case the support base is advantageously "disposable", i.e. it remains fixed to the semifinished product 100 and, when the latter is removed from the adaptive mold 1, it is detached from the support rods 3.

In accordance with a further above-described variant, a projecting body provided with an external thread allows positioning at least the first material during the first spreading step, and preferably also the second material during the second spreading step, around the projecting body, possibly by making fixing holes thereon. Therefore, after the hardening of the first and second layers, the semifinished product 100 can be fixed by applying a bolt, removable if necessary, on the projecting body. In such case, the fixing holes advantageously remain on the semifinished product 100 for possible subsequent fixing operations.

In accordance with a further above-described variant, a hollow body provided with an internal thread allows fixing the semifinished product 100 by means of screws, by making suitable fixing holes on the semifinished product 100 itself (also during the spreading steps). Also in such case, the fixing holes advantageously remain on the semifinished product 100 for possible subsequent fixing operations.

Of course, without departing from the protective scope of the present invention, the fixing means can be made in any other suitable manner for such purpose, different from the above-described variants.

Advantageously, then, the process comprises a fixing step, in which at least the base layer 101 is fixed to the adaptive mold 1 by means of the fixing means.

Preferably, the fixing step precedes the shaping step, such that the semifinished product 100 is stably fixed to the adaptive mold 1. Therefore, the adaptive mold 1 in this case advantageously acts as a support for the mechanical processing operations to which the semifinished product 100 can be subjected.

In the event in which the semifinished product 100 is a prototype mold for composite materials, the latter can be fixed to the adaptive mold 1 even when it must be used for attaining the prototypes made of composite material. In this manner, it is not necessary to make further supports for supporting the prototype mold during its use.

In such case, therefore, the adaptive mold 1 is advantageously reconfigured in a manner corresponding to the prototype mold each time the latter must be reused. Subsequently, the prototype mold, before its use, is newly mounted on the adaptive mold 1 and fixed to the latter.

The invention thus conceived therefore attains the pre-established objects.

## Claims

1. Process for attaining a semifinished product made of composite material, **characterized in that** it provides for:
- a step of arranging an adaptive mold (1), provided with:
- a main support structure (2);
- a plurality of support rods (3), which are slidably mounted on said main support structure (2), wherein each support rod (3) of said plurality of support rods (3) is movable along a corresponding adjustment direction (D) and is provided with a free end portion (31);
- blocking means, mounted on the main support structure (2) and arranged for blocking in position said support rods (3);
- an adjustment step, wherein at least one said support rod (3) is moved along the corresponding said adjustment direction (D) and blocked in a corresponding operating position by means of said blocking means;
- a first spreading step, wherein on the free end portions (31) of the support rods (3) of said adaptive mold (1), a first material is spread, which is a composite material; said first material comprising a first polymer matrix, thermoplastic or thermosetting, and a first fibrous reinforcement;
- a first hardening step, wherein said first material is allowed to at least partially harden in order to form a base layer (101);
- a second spreading step, wherein on said base layer (101), a second material is spread, which is an at least partially polymeric material;
- a second hardening step, wherein said second material is allowed to at least partially harden in order to form an upper layer (102) integral with said base layer (101);
said base layer (101) and said upper layer (102) forming a semifinished product (100) made of composite material.

2. Process according to claim 1, **characterized in that** it comprises a shaping step, following said second hardening step, wherein at least one portion of said second material is removed from the surface of said upper layer (102) in order to obtain, on said upper layer (102), a shaped surface (103).

3. Process according to claim 1 or 2, **characterized in that** the first polymer matrix of said first material is a thermosetting resin selected from among: epoxy, polyester, vinyl ester, and mixtures thereof.

4. Process according to claim 1 or 2, **characterized in that** the first polymer matrix of said first composite material is thermoplastic and comprises at least one from among: polypropylene (PP), polyamide (PA), polycarbonate (PC), polycaprolactone (PCL), polyether ether ketone (PEEK), polyphenylene sulfide (PPS), styrene-acrylonitrile (SAN), polyetherimide (PEI).

5. Process according to any one of the preceding claims, **characterized in that** said first fibrous reinforcement comprises at least one from among: carbon fiber, glass fiber, aramid fibers, ceramic fibers, natural fibers, metallic fibers.

6. Process according to any one of the preceding claims, **characterized in that** said second material is selected from among:
- an epoxy thermosetting paste;
- a thermosetting resin selected from among: epoxy, polyester, vinyl ester, polyurethane, and mixtures thereof;
- a composite material comprising a second polymer matrix, thermoplastic or thermosetting, and a second reinforcement; and
- combinations thereof.

7. Process according to claim 6, **characterized in that** said second material is a thermosetting paste or a thermosetting resin and is distributed in said second spreading step by means of: extrusion, spraying or manually.

8. Process according to claim 6, **characterized in that** said second material is a composite material and is distributed in said second spreading step by means of: manual spreading of second polymer matrix and second reinforcement, vacuum infusion, resin transfer molding (RTM), pre-preg spreading, automated tape laying (ATL), automated fiber placement (AFP) or automatic patch positioning.

9. Process according to any one of the preceding claims, **characterized in that** at least one said support rod (3) of said adaptive mold (1) comprises, at its own corresponding free end portion (31), fixing means, arranged for fixing said semifinished product (100) made of composite material to said adaptive mold (1);
said process comprising a fixing step, wherein at least said base layer (101) is fixed to said adaptive mold (1) by means of said fixing means.

10. Process according to claim 9, **characterized in that** said support rods (3) comprise an elongated sliding body (30), provided with said free end portion (31), and said fixing means, which comprise a fixing element mechanically associated with said free end portion (31);
wherein said fixing element is at least one selected from among:
- a support base made of material equivalent to the first polymer matrix of said first material;
- an adhesive support base;
- a projecting body provided with an external thread; and
- a hollow body provided with an internal thread.
